# FASCICULE DE BREVET EUROPEEN

(11) **EP 1 292 072 B1**
(45) Date de publication et mention de la délivrance du brevet: **04.04.2012**
(21) Numéro de dépôt: 02292185.2
(22) Date de dépôt: 05.09.2002
(51) Int. Cl.: H04L 12/437, H04J 14/02, H04Q 11/00

(54) **Méthode et système assurant la protection de la transmission de données sur un anneau optique formé d'une seule fibre optique**
System und Verfahren zum Übermittlungsschutz in einem optischen Ringnetz ausgeführt mit einziger Glasfaser
System and method for transmission protection in an optical ring built with a single optical fiber

(30) Priorité: 06.09.2001 FR 0111535
(43) Date de publication de la demande: 12.03.2003
(73) Titulaire: Alcatel Lucent, 75007 Paris (FR)
(72) Inventeur: Bisson, Arnaud, 91400 Orsay (FR); Noirie, Ludovic, 91620 Nozay (FR); Berthelon, Luc, 91120 Palaiseau (FR)
(74) Mandataire: Sciaux, Edmond

(56) Documents cités:
- WO-A-97/01907
- WO-A-99/03230
- WO-A-99/65164
- US-A- 5 870 212
- US-A- 6 108 466
- "INTEGRATED FIBER OPTICAL SWITCHING ELEMENT" IBM TECHNICAL DISCLOSURE BULLETIN, IBM CORP. NEW YORK, US, vol. 32, no. 10B, 1 mars 1990 (1990-03-01), pages 172-174, XP000097846 ISSN: 0018-8689

## Description

La présente invention concerne la technologie des transmissions par fibres optiques en général, et décrit plus particulièrement un système permettant d'améliorer la protection de la transmission des données sur un anneau optique, à faible coût de réalisation, ne comprenant qu'une seule fibre optique.

L'utilisation de fibres optiques pour la réalisation des nouveaux réseaux de communication est devenue la règle. C'est en particulier le cas pour les réseaux dits fédérateurs ou 'backbone' mis en place par les grands opérateurs de réseaux qui ont déployé une grande quantité de ces fibres depuis des années en raison des avantages intrinsèques liés au transport des données sur fibres optiques. Ceci est dû principalement à l'énorme bande passante utilisable par le transport de signaux optiques qui peuvent être modulés jusqu'à de très hautes fréquences (qui doivent être exprimées en giga ou 10⁹ bits par seconde) et qui néanmoins peuvent être propagés sur de longues distances. Par ailleurs l'utilisation, maintenant généralisée, d'une technique connue sous l'acronyme de WDM pour 'Wavelength Division Multiplexing' et qui consiste à pouvoir mélanger, sur une même fibre, des flux de lumière de plusieurs longueurs d'ondes voire des dizaines ou même des centaines de longueurs d'ondes différentes (dans ce cas on parle plutôt de DWDM pour 'Dense WDM') a multiplié d'autant la capacité de transport d'une seule de ces fibres et donc potentiellement du réseau dans lequel celle-ci est déployée.

Cependant la possibilité de pouvoir transporter en permanence d'énormes quantités de données passe obligatoirement par leur protection. Toutes les entreprises, administrations, banques et organisations de toutes sortes qui font maintenant un usage permanent de ces réseaux et dont toutes les activités, y compris les plus cruciales, dépendent d'un fonctionnement ininterrompu d'un réseau, exigent qu'en cas de panne ou de dysfonctionnement celui ci soit capable de retrouver toute sa fonctionnalité en un temps très bref. C'est en particulier ce qui a fait le succès des réseaux en anneau de type SONET ('Synchronous Optical NETwork) ou SDH ('Synchronous Digital Hierarchy') qui sont respectivement des standards Nord-américains et Européens, pour l'essentiel compatibles et qui normalisent des vitesses de transmission dans la gamme indiquée plus haut et dont les plus utilisées, pour les plus rapides d'entre elles, sont de 2,48 Gigabits/s (SONET OC-48 ou SDH STM-16), 10 Gb/s (SONET OC-192 ou SDH STM-64) et même à 40 Gigabits/s (SONET OC-768 ou SDH STM-256). Pour assurer un fonctionnement ininterrompu, ce type de réseau est de fait constitué d'un double anneau de fibres optiques. L'une est une voie de protection, au repos, et ne sert qu'en cas de rupture de la fibre active ou d'un dysfonctionnement majeur affectant celle-ci, après qu'une commutation automatique rapide, nécessitant moins de 50 millisecondes, dite APS pour ''Automatic Protection Switching', a été réalisée afin donc d'assurer la continuité du trafic, critère essentiel de qualité de ces réseaux transportant d'énormes quantités de données.

Si les techniques du type ci-dessus, c'est à dire WDM et protection du transport basée sur un double anneau de fibres, se sont effectivement mises en place sans difficultés dans les réseaux fédérateurs, leur coût de déploiement n'étant pas un facteur rédhibitoire, il n'en va de même pour d'autres types de réseaux tels que ceux qui sont qualifiés de métropolitains, plus proches du client final, mais dont justement le coût de déploiement et de fonctionnement ne peut pas être réparti sur un aussi grand nombre d'utilisateurs. Si le coût des équipements qui permettent de mettre effectivement en place la technique WDM a beaucoup baissé, ouvrant la porte au transport de plusieurs longueurs d'ondes sur une seule fibre y compris dans les réseaux métropolitains, et donc à l'augmentation de leur bande passante, cela ne va pas cependant en général jusqu'à pouvoir disposer d'une fibre de secours, au repos, qui ne serait utilisée qu'en cas de panne. Néanmoins le nombre important d'utilisateurs d'un réseau métropolitain et les activités tout aussi cruciales qui peuvent y avoir accès ont autant besoin d'une protection que les réseaux fédérateurs.

WO 99/03230 décrit un réseau en anneau auto-guérison et une méthode pour le traitement des défauts dans ledit réseau. Ledit réseau est constitué de deux voies de communication et au moins deux noeuds. Un premier noeud et un deuxième noeud (N5) suppriment la transmission et/ou la réception d'un segment dans l'anneau, dit segment inactif. Dans le cas d'un défaut survenant, le segment inactif est déplacé à la faute. Le réseau comprend un canal distinct de surveillance pour transmettre des informations sur la faille entre les noeuds du réseau, et dans ledit canal de surveillance un drapeau faute est prévue pour l'indication de la faute.

C'est pourquoi le but de l'invention est de permettre l'organisation d'un réseau en anneau à partir d'une fibre unique qui, tout en autorisant l'emploi des nouvelles techniques de multiplexage de longueurs d'ondes (WDM et DWDM) pour augmenter la bande passante et la fonctionnalité, permette cependant d'assurer un bon niveau de protection du transport des données pour ceux des réseaux ou le coût de déploiement et de fonctionnement est un facteur essentiel et en particulier où il n'est pas possible, ou pas envisageable, de laisser une fibre au repos qui ne serait utilisée qu'en cas de panne.

L'objet de l'invention est donc une méthode de reconfiguration d'un réseau optique en anneau formé à partir d'une seule fibre optique. L'anneau inclut un concentrateur de trafic et des stations connectés en mode optique sur la fibre. Le concentrateur émet un signal lumineux en utilisant un premier groupe de longueur d'ondes et reçoit un signal lumineux en utilisant un deuxième groupe de longueur d'ondes, les longueurs d'ondes utilisées et toutes différentes. Le concentrateur émet et reçoit simultanément à partir des deux extrémités de la fibre vers et depuis les stations. Lors de l'établissement du réseau, une coupure virtuelle est créée entre deux des stations. Lors de la détection d'une rupture de la fibre la coupure virtuelle est déplacée pour qu'elle coïncide avec la rupture, permettant de rétablir ainsi le trafic entre le concentrateur et les stations.

Pour la mise en oeuvre de l'invention, les stations sont équipées d'un commutateur optique à trois états formant un quadripôle permettant la transmission des signaux lumineux, entre les quatre pôles, selon trois modes de fonctionnement, un mode direct, un mode croisé un mode transparent qui est aussi le mode de repos du dispositif.

Les buts, objets, ainsi que les caractéristiques et avantages de l'invention ressortiront mieux de la description détaillée d'un mode préféré de réalisation de cette dernière. illustré par les dessins d'accompagnement dans lesquels :
La FIGURE 1 est un diagramme qui montre un réseau en anneau selon l'invention.
Les FIGURES 2A et 2B sont des représentations schématiques montrant comment le réseau en anneau de l'invention peut être reconfiguré après rupture de la fibre optique.
Les FIGURES 3A et 3B sont des représentations schématiques montrant une autre façon de procéder pour reconfigurer l'anneau après rupture de la fibre optique.
Les FIGURES 4A, 4B et 4C sont des représentations schématiques d'un commutateur à trois états selon l'invention utilisé respectivement en mode direct, mode croisé et mode transparent.
Les FIGURES 5A, 5B et 5C représentent un premier mode de réalisation d'un commutateur à trois états selon l'invention utilisé respectivement en mode direct, mode croisé et mode transparent.
Les FIGURES 6A, 6B et 6C représentent un deuxième mode de réalisation d'un commutateur à trois états utilisé dans l'invention respectivement en mode direct, mode croisé et mode transparent.
Les FIGURES 7A, 7B et 7C représentent un troisième mode de réalisation d'un commutateur à trois états utilisé dans l'invention respectivement en mode direct, mode croisé et mode transparent.

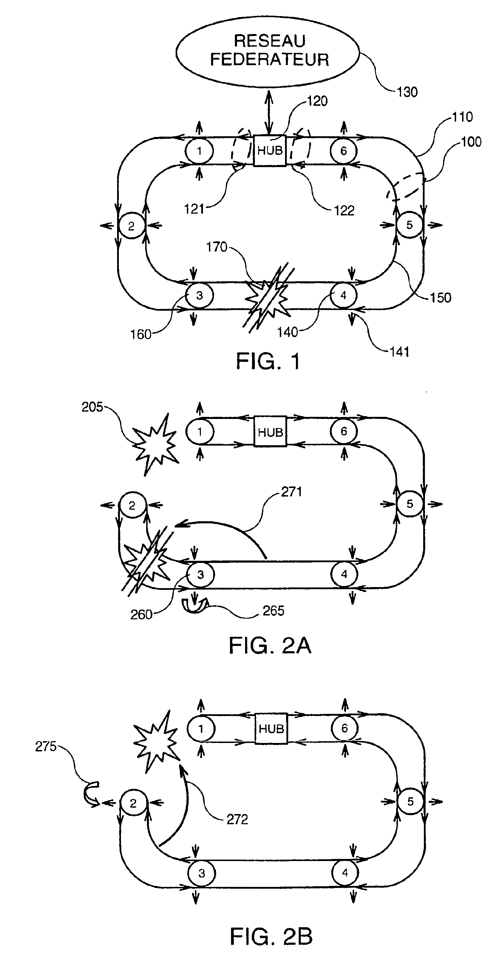

La figure 1 décrit le principe de fonctionnement d'un anneau selon l'invention. Comme mentionné ci-dessus, l'invention fait l'hypothèse que l'anneau est composé d'une seule fibre (100), pour en limiter le coût ou parce qu'on ne dispose effectivement que d'une seule fibre, sur laquelle on fait cependant circuler des flux lumineux sur au moins deux longueurs d'ondes et, d'une façon générale, sur deux groupes de longueurs d'ondes toutes différentes. L'un des groupes de longueurs d'ondes (110), désigné λ_{T}, comprenant en général plusieurs longueurs d'ondes λ_{T1}, λ_{T2}, ... λ_{Tn} est porteur du trafic descendant, c'est à dire qu'il est issu d'un 'hub' (120) ou concentrateur dont le rôle est d'une part de gérer le trafic sur le réseau en anneau selon l'invention et, d'autre part, d'interfacer d'autres réseaux par exemple un réseau fédérateur (130) ou 'backbone'. Le concentrateur est ainsi le point d'accès au réseau de l'invention. Le trafic descendant, sur le groupe de longueurs d'ondes λ_{T}, est à destination des stations présentes sur l'anneau comme par exemple la station (140) portant le numéro 4. Chaque station est une station dite 'OADM' pour 'Optical Add/Drop Multiplexer' ou encore Multiplexeur Insertion/Extraction Optique. Comme le nom le suggère chaque station 'OADM' est ainsi apte, en mode optique, à dériver (141) la partie du trafic qui lui est destinée (une ou plusieurs des longueurs d'ondes du groupe λ_{T}) et à insérer (142) son propre trafic en direction du 'hub' tout en laissant circuler librement l'ensemble des longueurs d'ondes émises et reçues par le 'hub'. L'insertion se fait sur l'autre groupe de longueurs d'ondes appelé λ_{R}, comprenant en général plusieurs longueurs d'ondes λ_{R1}, λ_{R2},... λ_{Rn}. Le trafic en provenance des stations (150) vers le 'hub', sur le groupe des longueurs d'ondes λ_{R} donc, est dit montant.

Pour former un anneau, la fibre, unique, est connectée à ses deux extrémités (121) et (122), c'est à dire de part et d'autre du 'hub' (120) dans cette représentation schématique d'un anneau selon l'invention. Le 'hub' est ainsi supposé être à même d'émettre et de recevoir sur les groupes de longueurs d'ondes mentionnées ci-dessus, λ_{T} et λ_{R} respectivement, soit à partir de deux interfaces distinctes chacune recevant une extrémité de la fibre, soit à partir d'une seule interface étant entendu que les extrémités de la fibre sont alors couplées par un dispositif optique externe approprié.

Ainsi le 'hub' émet et reçoit à partir des deux extrémités de la fibre simultanément, en mode bidirectionnel, les longueurs d'ondes des deux groupes λ_{T} et λ_{R} qui se déplacent en sens opposé. Selon une caractéristique essentielle de l'invention, une coupure virtuelle (170) est créée entre deux stations à l'établissement du réseau ou lors d'une reconfiguration de celui-ci. Cette coupure est située de préférence entre les deux stations les plus éloignées du 'hub' donc entre les stations portant les numéros 3 (160) et 4 (140) dans cet exemple particulier de mise en oeuvre de l'invention. Il n'y donc alors aucune communication entre ces dernières en fonctionnement normal.

On aura noté qu'un anneau selon l'invention organise essentiellement le trafic entre le 'hub' d'une part et les stations d'autre part. Le but étant, comme décrit ci-après, de protéger ce type de trafic. L'invention n'empêche cependant pas que du trafic inter-station puisse exister simultanément, y compris entre les stations situées de part et d'autre de la coupure virtuelle (170), sans toutefois que ce trafic ait la même garantie de protection en cas de rupture de la fibre.

La figure 2A montre la première étape d'une reconfiguration du réseau en cas de rupture de la fibre (205) entre les stations portant les numéros 1 et 2 dans cet exemple. Quand cette rupture est localisée la coupure virtuelle est d'abord déplacée d'un pas (271), vers la rupture physique, donc entre les stations portant les numéros 2 et 3. Cette dernière (260) inverse (265) le sens de circulation du trafic de l'anneau de telle façon qu'il circule désormais, après inversion, entre les stations portant les numéros 3 et 4 alors que précédemment il n'y avait aucun échange sur cette portion de la fibre.

La figure 2B montre la deuxième et dernière étape de la reconfiguration dans cet exemple particulier d'une rupture de la fibre entre les stations 1 et 2. La coupure virtuelle est déplacée d'un pas supplémentaire (272) de telle façon que rupture physique et coupure virtuelle coïncident. Comme dans la première étape ci-dessus la station portant le numéro 2 doit inverser le sens de circulation du trafic sur l'anneau (285) de telle façon qu'après reconfiguration il circule de la station portant le numéro 2 vers la station portant le numéro 3.

A ce stade, la reconfiguration est terminée et le 'hub' est à même de transmettre et de recevoir à nouveau depuis l'ensemble des stations connectées sur l'anneau.

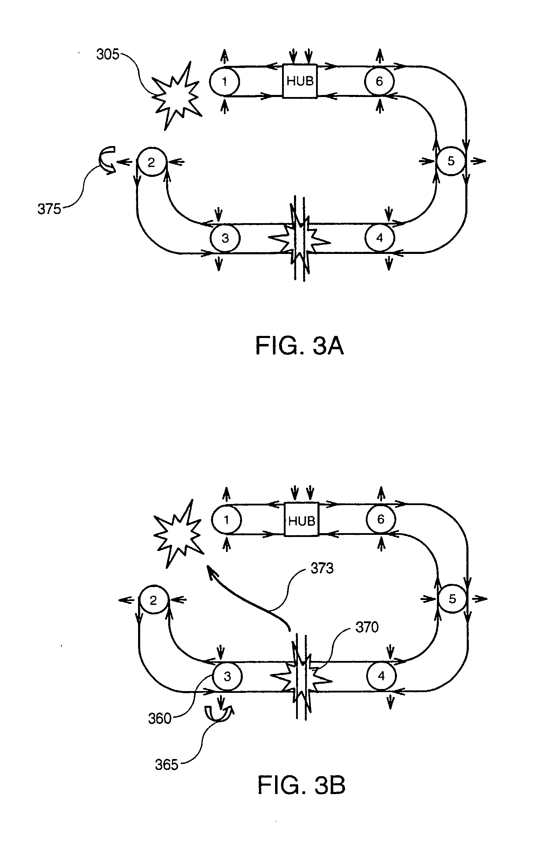

Un autre mode de reconfiguration équivalent est aussi possible, en deux étapes également, qui sont expliquées en référence aux figures 3A et 3B. Dans ce mode de reconfiguration l'hypothèse est faite que les stations détectent qu'elles reçoivent ou non de la lumière à travers la fibre. Quand ce n'est plus le cas en raison de la rupture de la fibre (305) comme dans l'exemple précédent entre les stations 2 et 3, la station portant le numéro 2 inverse alors automatiquement le sens de circulation du trafic sur l'anneau (375). Cette inversion est détectée à son tour par la station suivante (360) qui bascule également le sens de circulation (365). Après quoi la coupure virtuelle (370) est déplacée (373) pour coïncider avec la rupture physique. Comme dans le cas précédent, à ce stade, le reconfiguration est terminée et le trafic entre le 'hub' et les stations est complètement rétabli.

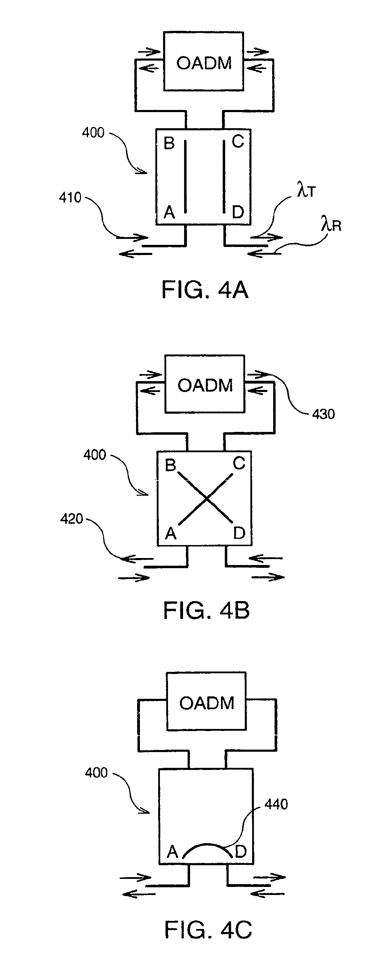

La mise en oeuvre de l'invention suppose donc que, quel que soit le mode de reconfiguration, les stations sont toutes équipées d'un commutateur optique à trois états (400), formant un quadripôle (A, B, C, D) dont les modes de fonctionnement sont décrits avec les figures 4A, 4B et 4C.

La figure 4A décrit le mode direct (410) de circulation des signaux lumineux portant les longueurs d'ondes des deux groupes, λ_{T} et λ_{R}, reçues par la fonction OADM des stations, dans le sens indiqué sur cette figure 4A, mode normal de circulation du trafic quand il n'y aucune rupture de la fibre ainsi que discuté initialement avec la figure 1.

La figure 4B montre le commutateur optique à trois états dans son deuxième état dit croisé. Dans ce cas, le sens de circulation des signaux sur l'anneau est effectivement inversé (420), comme le demande la reconfiguration de celui-ci décrite précédemment, alors même que la fonction OADM continue de recevoir les signaux de façon identique (430).

Quant à la figure 4C, elle montre le troisième état du commutateur optique qui est ici en mode transparent (440) et où la fonction OADM de la station est déconnectée de l'anneau. Si ce mode de fonctionnement n'est pas strictement nécessaire à l'un ou l'autre mode de reconfiguration décrits dans les figures 2 et 3, ceci permet effectivement d'isoler une station du réseau par exemple parce qu'elle n'est simplement pas mise sous tension. Le mode transparent est ainsi le mode par défaut, au repos, du commutateur optique qui ne nécessite pas qu'une tension soit appliquée pour être effectivement dans cet état assurant ainsi la continuité de l'anneau. Par ailleurs cet état peut être un état intermédiaire lors de la reconfiguration de l'anneau, entre mode normal et mode croisé et vice versa, pour faciliter cette opération et ménager une période pendant laquelle la fonction OADM d'une station est effectivement isolée pendant le court instant où les décisions de reconfiguration se prennent.

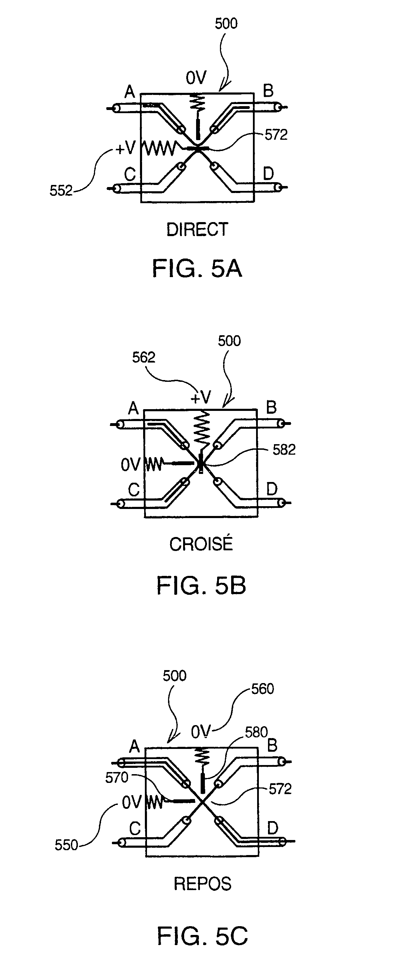

Les figures 5A à 5C décrivent plus précisément un mode de réalisation du commutateur optique à trois états (500) convenant à l'invention. Elles font appel en général aux techniques maintenant classiques dites MEM pour Micro-Electro-Mécanique qui se sont beaucoup développées dans les années passées et qui concernent des dispositifs mécaniques de petite ou de très petite taille à commande électrique. En particulier des commutateurs optiques où des miroirs sont déplacés mécaniquement sous l'action d'une tension électrique afin d'orienter les rayons lumineux.

Dans la figure 5A, une tension est appliquée (552) sur le miroir horizontal à deux faces réfléchissantes qui se déplace pour renvoyer la lumière de A vers B et de C vers D. Cet état du commutateur correspond au mode direct de fonctionnement décrit précédemment et donc à la figure 4A.

Dans la figure 5B, une tension est appliquée (562) au contraire sur le miroir vertical qui se déplace pour réfléchir la lumière de A vers C et de B vers D. Cet état du commutateur correspond au mode croisé de fonctionnement décrit précédemment et donc à la figure 4B.

Dans la figure 5C, le commutateur est au repos, en mode transparent correspondant à la figure 4C, c'est à dire que le passage de la lumière se fait librement, entre les conduits de lumière, entre A et D et entre C et B sans qu'aucune tension n'ait besoin d'être appliquée sur les broches de commande (550) et (560). Les deux miroirs mobiles sont dans leur position de repos (570) et (580).

On notera bien sûr que la réalisation d'un commutateur optique tel que décrit ci-dessus implique obligatoirement qu'une tension ne soit pas appliquée simultanément sur les broches (550) et (560) sous peine de voir le commutateur détruit. Ceci sera aisément contrôlé par l'intermédiaire d'un circuit logique du type OU exclusif qui empêche que les deux miroirs puissent être effectivement activés simultanément.

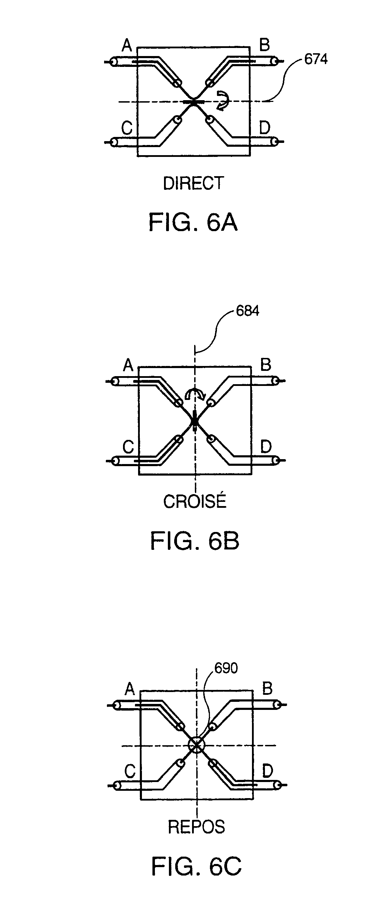

Les figure 6A, 6B et 6C décrivent un autre mode de réalisation différente du commutateur à trois états convenant à l'invention. Un seul miroir est ici utilisé qui, en position de repos, est parallèle (690) au plan de représentation du dispositif. Comme avec la réalisation précédente, en mode repos, le trafic passe de façon transparente c'est à dire que le passage de la lumière se fait librement entre A et D et entre C et B sans qu'aucune tension n'ait besoin d'être appliquée.

Dans la figure 6A, le miroir subit une rotation selon l'axe horizontal (674) afin d'obtenir le mode direct du commutateur et donc le mode de fonctionnement de la figure 4A.

Dans la figure 6B la rotation du miroir se fait selon l'axe vertical (684) pour obtenir le mode croisé du commutateur et donc le fonctionnement correspondant au mode de la figure 4B.

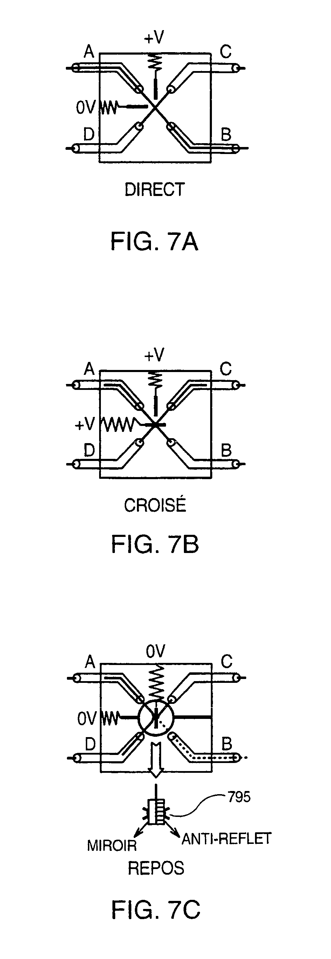

Enfin les figures 7A, 7B et 7C montrent un troisième mode de réalisation du commutateur à trois états qui est une variante du premier mode de réalisation décrit sur les figures 5A à 5C. L'amélioration apportée concerne le mode repos. Si on se réfère à la figure 4C on notera qu'avec le mode de fonctionnement transparent, où la fonction OADM n'est pas utilisée, il serait souhaitable, comme représenté dans cette figure, qu'il n'y ait pas de communication entre les deux connexions de cette fonction au commutateur optique. Même si cela ne change rien au fonctionnement du réseau tel que décrit jusqu'à présent les deux réalisations précédentes ne répondent pas à cette attente et établissent de fait aussi une connexion similaire à celle référencée (440) dans la figure 4C. Comme il existe au moins un émetteur de lumière, un laser, dans la fonction OADM de la station, l'énergie de celui ci est renvoyée totalement vers les récepteurs optiques qui sont aussi présents dans la fonction. Ceci les aveugle et peut même les endommager si le laser est suffisamment puissant. Il y a donc avantage à ce que ce chemin de retour n'existe pas ou, qu'à tout le moins, une forte atténuation s'opère. C'est l'avantage qu'apporte le troisième mode de réalisation du commutateur optique à trois états des figures 7A à 7C. On notera que le miroir vertical à une face anti-reflet (795) qui assure effectivement cette atténuation dans le chemin de retour. On notera également que pour obtenir ce fonctionnement dans l'état croisé de la figure 7B il est fait maintenant usage, dans ce troisième mode de réalisation, du miroir horizontal dont les deux faces restent effectivement des miroirs réfléchissants. Les références des quatre connexions optiques notées A, B, C et D s'en trouvent changées par rapport à la description des deux autres modes de réalisation, ce qui ne change en rien, bien entendu, l'utilisation pratique du dispositif.

## Revendications

1. Méthode de reconfiguration d'un réseau optique en anneau formé d'une seule fibre optique (100), ledit réseau incluant au moins un concentrateur de trafic (120) et au moins une station (140) connectés en mode otique sur ladite fibre, ledit concentrateur émettant un signal lamineux sur un premier groupe comprenant au moins une longueur d'onde (110), et recevant un signal lumineux sur un deuxième groupe comprenant au moins une longueur d'onde (150) différente de ladite première longueur d'onde, ledit concentrateur émettant et recevant simultanément à partir des deux extrémités de ladite fibre (121, 122) sur ledit premier groupe et sur ledit deuxième groupe de longueurs d'ondes vers et depuis ladite au moins une station ;
ladite méthode comprenant les étapes suivantes :
a) création, lors de l'établissement dudit réseau, d'une coupure virtuelle (170) entre ladite au moins une station et ledit concentrateur (120) ;
b) déplacement (271, 272) lors de la détection d'une rupture (205) de la fibre, de ladite coupure virtuelle pour qu'elle coïncide avec ladite rupture (272), de manière à rétablir ainsi le trafic entre ledit concentrateur et ladite au moins une station; dans laquelle
ladite coupure virtuelle est créée entre deux desdites stations (140, 160) les plus éloignées dudit concentrateur.

2. Méthode selon la revendication 1, dans laquelle l'étape b) de déplacement est **caractérisée en ce que** ledit déplacement de ladite coupure virtuelle s'effectue pas à pas (271, 272), vers l'emplacement de la rupture de la fibre (205) en partant de la position où la coupure virtuelle a été créée initialement, ladite étape de déplacement pas à pas comprenant en outre l'étape suivante :
b1) inversion du sens de circulation du trafic (265, 275) à chaque station traversée.

3. Méthode selon selon la revendication 1, **caractérisée en ce qu'**elle s'effectue sous le contrôle dudit concentrateur.

4. Méthode selon la revendication 1, dans laquelle l'étape b) de déplacement est **caractérisée en ce que** ledit déplacement (373) de ladite coupure virtuelle (370) résulte de ce que les étapes supplémentaires suivantes sont préalablement effectuées automatiquement à partir de la rupture (305), pas à pas, pour chaque station située en aval, jusqu'à l'endroit de la coupure virtuelle (370),
b1) détection d'une absence de lumière reçue depuis la station située immédiatement en amont, et
b2) inversion du sens de circulation du trafic (375, 365).

5. Système du type réseau optique en anneau, comprenant des moyens adaptés pour mettre en oeuvre la méthode décrite dans l'une quelconque des revendications précédentes.

6. Système selon la revendication 5, **caractérisé en ce qu'**il comporte un commutateur otique à trois états (400) formant un quadripôle A, B, C, D **caractérisé en ce qu'**il permet la transmission des signaux lumineux, entre les quatre pôles, selon l'un quelconque des trois modes de transmission suivants :
entre les pôles A et B d'une part, et entre les pôles C et D d'autre part, correspondant au mode direct de propagation;
entre les pôles A et C d'une part, et entre les pôles B et D d'autre part, correspondant au mode croisé de propagation;
entre les pôles A et D, correspondant au mode transparent de propagation.

7. Système selon la revendication 6, **caractérisé en ce que** lesdits trois modes de transmission sont obtenus par l'application d'une tension électrique sur une ou plusieurs broches externes audit commutateur et qu'en l'absence de toute tension appliquée ledit commutateur est dans ledit mode transparent qui est ainsi le mode de repos dudit commutateur.

8. Système selon la revendication 7, **caractérisé en ce qu'** il comprend deux miroirs (570, 580) à deux faces réfléchissantes, lesdits miroirs étant situés orthogonalement et pouvant se déplacer respectivement selon un axe horizontal (572) et un axe vertical (582) sous l'action d'une tension électrique appliquée sur l'une ou l'autre des deux broches externes (550, 560) dudit commutateur optique.

9. Système selon la revendication 7, **caractérisé en ce qu'**il comprend un seul miroir ayant deux faces réfléchissantes, ledit miroir pouvant pivoter selon deux axes de rotation l'un horizontal (674) et l'autre vertical (684).

10. Système selon la revendication 9, **caractérisé en ce que** l'un desdits miroirs comporte une face anti reflet (795) de façon à ce la lumière ne puisse pas être transmise entre les broches B et C dudit quadripôle, ou soit fortement atténuée, quand celui-ci est dans ledit mode transparent, mode de repos dudit commutateur.

## Claims

1. A method for reconfiguring a ring-shaped optical network formed of a single optical fiber (100), said network including at least one traffic hub (120) and at least one station (140) connected in optical mode on said fiber, said hub emitting a light signal from a first group comprising at least one wavelength (110), and receiving a light signal from a second group comprising at least one wavelength (150) different from said first wavelength, said hub emitting and receiving simultaneously from both ends of said fiber (121, 122) from said first group and from said second group of wavelengths to and from said at least one station;
said method comprising the following steps:
a) creating, when said network is established, a virtual interruption (170) between said at least one station and said hub (120);
b) moving (271, 272) said virtual interruption, whenever a rupture (205) is detected in said fiber, so that it coincides with said rupture (272), in order to thereby restore traffic between said hub and said at least one station; wherein
said virtual interruption is created between two of said stations (140, 160) that are the furthest from said hub.

2. A method according to claim 1, wherein step b) of moving is **characterized in that** said moving of said virtual interruption is performed one step at a time (271, 272), towards the location of the rupture in the fiber (205), starting from the position where the virtual interruption was initially created, said step of one-step-at-a-time moving further comprising the following step:
b1) reversing the direction in which traffic (265, 275) travels at each station that is traversed.

3. A method according to claim 1, **characterized in that** it is performed under the control of said hub.

4. A method according to claim 1, wherein step b) of moving is **characterized in that** said moving (373) of said virtual interruption (370) results from the following additional steps, carried out automatically beforehand after the interruption (305), one step at a time, for each station located downstream, until reaching the location of the virtual interruption (370),
b1) detecting an absence of light received from the station located immediately upstream, and
b2) reversing the direction in which traffic (375, 365) travels.

5. A system of the ring-shaped optical network type, comprising means adapted to implement the method described in any one of the preceding claims.

6. A system according to claim 5, **characterized in that** it comprises a three-state optical switch (400) forming a quadrupole A, B, C, D, **characterized in that** it enables the transmission of light signals, between the four poles, based on any one of the following three transmission modes:
between the poles A and B, as well as between the poles C and D, corresponding to direct propagation mode;
between the poles A and C, as well as between the poles B and D, corresponding to cross-propagation mode.
between the poles A and D, corresponding to transparent propagation mode.

7. A system according to claim 6, **characterized in that** said three transmission modes are obtained by applying an electrical voltage to one or more pins external to said switch, and that in the absence of any applied voltage, said switch is in said transparent mode, which is thereby said switch's rest mode.

8. A system according to claim 7, **characterized in that** it comprises two mirrors (570, 580) with two reflective faces, said mirrors being located orthogonally and able to move respectively along a horizontal axis (572) and a vertical axis (582) in response to an electrical voltage applied to either one of the external pins (550, 560) of said optical switch.

9. A system according to claim 7, **characterized in that** it comprises a single mirror having two reflective faces, said mirror being able to pivot along two axes of rotation, one horizontal (674) and the other vertical (684).

10. A system according to claim 9, **characterized in that** one of said mirrors comprises an anti-reflective face (795), so that light cannot be transmitted between the pins B and C of said quadrupole, or is heavily attenuated, when it is in said transparent mode, namely. the rest mode of said switch.

## Patentansprüche

1. Verfahren zur Rekonfiguration eines optischen Ringnetzwerks, welches aus einer einzelnen optischen Faser (100) gebildet ist, wobei das besagte Netzwerk mindestens einen Verkehrskonzentrator (120) und mindestens eine Station (140), welche optisch auf der besagten Faser angeschlossen sind, umfasst, wobei der besagte Konzentrator auf einer ersten Gruppe mit mindestens einer Wellenlänge (110) ein Lichtsignal ausgibt und auf einer zweiten Gruppe mit mindestens einer sich von der besagten ersten Wellenlänge unterscheidenden Wellenlänge (150) ein Lichtsignal empfängt, wobei der besagte Konzentrator simultan ab den beiden Enden der besagten Faser (121, 122) auf der besagten ersten Wellenlängengruppe und auf der besagten zweiten Wellenlängengruppe an die besagte mindestens eine Station sendet und von der besagten mindestens einen Station empfängt;
wobei das besagte Verfahren die folgenden Schritte umfasst:
a) Herstellen, während des Aufbaus des besagten Netzwerks, einer virtuellen Unterbrechung (170) zwischen der besagten mindestens einen Station und dem besagten Konzentrator (120) ;
b) Verschieben (271, 272), bei Erkennen eines Bruchs (205) der Faser, der besagten virtuellen Unterbrechung, so dass sie sich mit dem besagten Bruch (272) deckt, um so den Verkehr zwischen dem besagten Konzentrator und der besagten mindestens einen Station wieder herzustellen, wobei
die besagte virtuelle Unterbrechung zwischen zwei der besagten Stationen (140, 160), die am weitesten von dem besagten Konzentrator entfernt sind, hergestellt wird.

2. Verfahren nach Anspruch 1, wobei der Schritt b) des Verschiebens **dadurch gekennzeichnet ist, dass** die besagte Verschiebung der besagten virtuellen Unterbrechung schrittweise (271, 272) bis zur Stelle des Bruchs der Faser (205), ausgehend von der Position, an welcher die virtuelle Unterbrechung ursprünglich hergestellt worden ist, erfolgt, wobei der besagte Schritt des schrittweisen Verschiebens weiterhin den folgenden Schritt umfasst:
b1) Umkehren der Laufrichtung des Verkehrs (265, 275) an jeder durchquerten Station.

3. Verfahren nach Anspruch 1, **dadurch gekennzeichnet, dass** es von dem besagten Konzentrator gesteuert wird.

4. Verfahren nach Anspruch 1, wobei der Schritt b) des Verschiebens **dadurch gekennzeichnet ist, dass** sich das besagte Verschieben (373) der besagten virtuellen Unterbrechung (370) daraus ergibt, dass zuvor die folgenden zusätzlichen Schritte automatisch schrittweise ab dem Bruch (305) für jede nachgeschaltete Station bis zur Stelle der virtuellen Unterbrechung (370) durchgeführt werden:
b1) Erkennen des Fehlens von von der unmittelbar vorgeschalteten Station empfangenen Lichts, und
b2) Umkehren der Laufrichtung des Verkehrs (375, 365).

5. System vom Typ optisches Ringnetz, mit Mitteln, die für die Implementierung des in einem der vorstehenden Ansprüche beschriebenen Verfahrens ausgelegt sind.

6. System nach Anspruch 5, **dadurch gekennzeichnet, dass** es einen optischen Schalter mit drei Schaltzuständen (400), welcher einen Vierpol A, B, C, D bildet, umfasst, **dadurch gekennzeichnet, dass** es die Übertragung der Lichtsignale, zwischen den vier Polen, gemäß einem beliebigen der drei folgenden Übertragungsmodi ermöglicht:
zwischen den Polen A und B, einerseits, und zwischen den Polen C und D, anderseits, welches dem direkten Ausbreitungsmodus entspricht;
zwischen den Polen A und C, einerseits, und zwischen den Polen B und D, anderseits, welches dem gekreuzten Ausbreitungsmodus entspricht;
zwischen den Polen A und D, welches dem transparenten Ausbreitungsmodus entspricht.

7. System nach Anspruch 6, **dadurch gekennzeichnet, dass** die besagten drei Übertragungsmodi durch das Anlegen einer elektrischen Spannung auf einem oder mehreren Stiften außerhalb des besagten Schalters erhalten werden, und dass sich der besagte Schalter bei Fehlen jeglicher angelegter Spannung im besagten transparenten Modus, welcher folglich der Ruhemodus des besagten Schalters ist, befindet.

8. System nach Anspruch 7, **dadurch gekennzeichnet, dass** es zwei Spiegel (570, 580) mit zwei reflektierenden Flächen umfasst, wobei die besagten Spiegel orthogonal angeordnet sind und sich unter der Einwirkung einer auf dem einen oder anderen Stift (550, 560) außerhalb des besagten optischen Schalters angelegten elektrischen Spannung jeweils gemäß einer horizontalen Achse (572) und einer vertikalen Achse (582) verschieben können.

9. System nach Anspruch 7, **dadurch gekennzeichnet, dass** es einen einzelnen Spiegel mit zwei reflektierenden Flächen umfasst, wobei der besagte Spiegel gemäß zwei Drehachsen, die eine horizontal (674) und die andere vertikal (684) verschwenkbar ist.

10. System nach Anspruch 9, **dadurch gekennzeichnet, dass** einer der besagten Spiegel eine Antireflex-Fläche (795) aufweist, so dass das Licht nicht zwischen den Stiften B und C des besagten Vierpols übertragen werden kann oder stark abgeschwächt wird, wenn sich dieser in dem besagten transparenten Modus, dem Ruhemodus des besagten Schalters, befindet.
